# EUROPEAN PATENT SPECIFICATION

(11) **EP 3 018 973 B1**
(45) Date of publication and mention of the grant of the patent: **01.09.2021**
(21) Application number: 14829683.3
(22) Date of filing: 04.05.2014
(51) Int. Cl.: H04W 88/06, H04B 1/403

(54) **MULTIMODE WIRELESS TERMINAL**
MULTIMODALES DRAHTLOSES ENDGERÄT
TERMINAL SANS FIL MULTIMODE

(30) Priority: 26.07.2013 CN 201310320135
(43) Date of publication of application: 11.05.2016
(73) Proprietor: Huawei Technologies Co., Ltd., Longgang District Shenzhen, Guangdong 518129 (CN)
(72) Inventor: ZHAO, Yuqing, Shenzhen Guangdong 518129 (CN); WANG, Bin, Shenzhen Guangdong 518129 (CN); WU, Jianjun, Shenzhen Guangdong 518129 (CN)
(74) Representative: Epping - Hermann - Fischer
(86) International application number: PCT/CN2014/076722
(87) International publication number: WO 2015/010484

(56) References cited:
- EP-A1- 1 551 107
- WO-A1-99/23762
- WO-A1-2005/078916
- WO-A1-2008/146090
- CN-A- 1 241 332
- CN-A- 1 795 616
- CN-A- 101 945 490
- US-A1- 2003 067 894
- US-A1- 2010 216 412

## Description

### TECHNICAL FIELD

Embodiments of the present invention relate to wireless communications technologies, and in particular, to a multimode wireless terminal.

### BACKGROUND

As a mobile communications technology develops, the mobile communications technology develops into a 4th generation mobile telecommunications technology (Fourth Generation, 4G). However, a current status of a mobile communications network is that a 2nd generation mobile telecommunications technology (Second Generation, 2G), a 3rd generation mobile telecommunications technology (Third Generation, 3G), and the 4G coexist, and a mobile telecommunications technology of each generation has various standards. Therefore, in a current mobile communications system, wireless communications networks with various different standards coexist, such as the Global System for Mobile Communications (Global System of Mobile communication, GSM), the Wideband Code Division Multiple Access (Wideband Code Division Multiple Access, WCDMA), the Time Division-Synchronous Code Division Multiple Access (Time Division-Synchronous Code Division Multiple Access, TD-SCDMA), and the Long Term Evolution (Long Term Evolution, LTE).

A multimode wireless terminal can communicate in wireless communications networks with different standards. However, corresponding hardware modules, such as an antenna module, a radio frequency transceiver module, and a baseband processing module, need to be disposed on a current multimode wireless terminal according to wireless communications networks with different standards, so that the wireless terminal can work in corresponding wireless communications networks. Various hardware modules corresponding to different standards separately form an independent system, and each independent system can work only according to parameters, such as a network standard, a frequency band, and bandwidth, where the parameters are fixedly set on the hardware module. Therefore, different hardware modules may be disposed on an existing multimode wireless terminal according only to different network environments, that is, different multimode wireless terminals are required in different network environments.

US 2010/0216412 A1 discloses a configurable radio frequency (RF) transceiver including a configuration controller that generates at least one mode control signal that indicates an isolation mode, a frequency mode and an antenna mode. An antenna section includes a plurality of antennas and that selects an antenna configuration based on the at least one mode control signal. An isolation section includes a plurality of isolation circuits and that selects an isolation circuit based on the at least one mode control signal. An RF section selects an RF configuration based on the at least one mode control signal. A baseband section selects a baseband configuration based on the at least one mode control signal.

CN 101945490 A discloses a software radio-based wireless communication system terminal equipment, which consists of a physical layer processing module, an upper layer processing module and a universal interface module. A base band processing module of the physical layer processing module implements processing of base band and intermediate frequency of physical layer signals, and different radio-frequency transceiving modules are selected according to the configured different communication protocols and standards to implement transceiving of radio-frequency signals; the upper layer processing module realizes the functions of layers above a physical layer; and the universal interface module is used for connection between the physical layer processing module and the upper layer processing module, and realizes quick and efficient information transmission by adopting a standard bus structure so that the whole system runs smoothly and meets the real-time requirement.

### SUMMARY

Embodiments of the present invention provide a multimode wireless terminal as defined in claim 1, which is configured to provide a wireless terminal device that is applicable to various network environments.

According to the multimode wireless terminal provided in the claims, a general-purpose central processing unit, a reconfigurable baseband processing module, a reconfigurable intermediate radio frequency module, and a reconfigurable antenna module are disposed on the multimode wireless terminal, so that the multimode wireless terminal can work in at least one wireless communications standard; because the modules can reconfigure a processing capability and configuration of the modules according to configuration information of a wireless communications standard, the multimode wireless terminal can work in any one or more wireless communications standards. Therefore, the multimode wireless terminal provided in the embodiments of the present invention is applicable to any network environment, and when the network environment changes, the multimode wireless terminal does not need to be replaced, which saves costs to replace the device.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic structural diagram of a multimode wireless terminal in the prior art;
FIG. 2 is a schematic structural diagram of another multimode wireless terminal in the prior art;
FIG. 3 is a schematic structural diagram of a multimode wireless terminal;
FIG. 4 is a schematic structural diagram of a multimode wireless terminal;
FIG. 5 is a schematic structural diagram of a multimode wireless terminal;
FIG. 6 is a schematic structural diagram of a multimode wireless terminal according to an embodiment of the present invention; and
FIG. 7 is a schematic structural diagram of a multimode wireless terminal according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention.

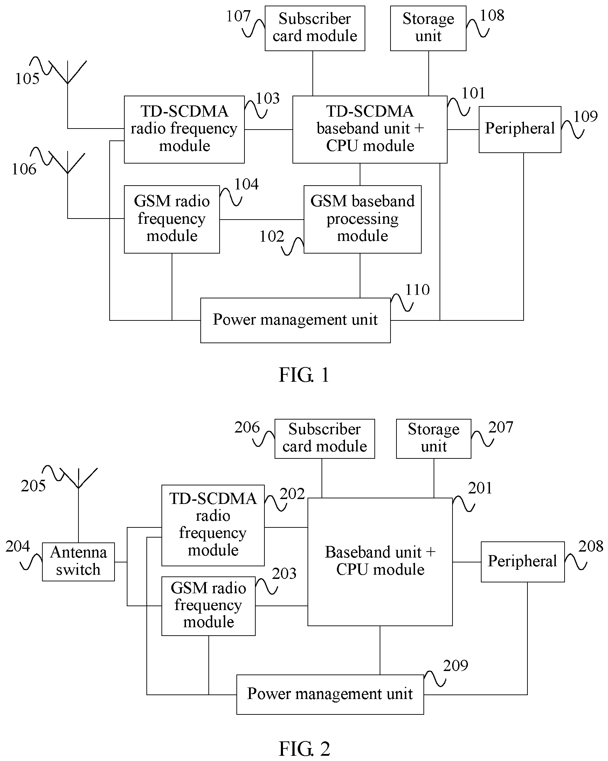

FIG. 1 is a schematic structural diagram of a multimode wireless terminal in the prior art. For example, the multimode wireless terminal is a TD-SCDMA/GSM dual-mode mobile phone. As shown in FIG. 1, a TD-SCDMA baseband unit+central processing unit (Central Processing Unit, CPU) module 101 includes these parts: a TD-SCDMA baseband processing unit and a CPU, where: the CPU is configured to process data of protocol layers, except physical layers, of a TD-SCDMA standard and a GSM standard; the TD-SCDMA baseband processing unit is configured to process data of a physical layer of the TD-SCDMA standard; and the TD-SCDMA baseband processing unit and the CPU are integrated into an application-specific integrated circuit (Application Specific Integrated Circuit, ASIC) chip. A GSM baseband module 102 is configured to process data of a physical layer of the GSM standard, and the GSM baseband module 102 is connected to the TD-SCDMA baseband unit+central processing unit module 101 and transmits data by using an input/output (Input/Output, I/O) interface. A TD-SCDMA radio frequency (Radio Frequency, RF) module 103 is connected to the TD-SCDMA baseband unit+central processing unit module 101 and configured to convert the data of the physical layer of the TD-SCDMA into a TD-SCDMA radio frequency signal or conversely. A GSM RF module 104 is connected to the GSM baseband module 102 and configured to convert the data of the physical layer of the GSM into a GSM radio frequency signal or conversely. A TD-SCDMA antenna module 105 is configured to receive and send the TD-SCDMA radio frequency signal. A GSM antenna module 106 is configured to receive and send the GSM radio frequency signal. The TD-SCDMA/GSM dual-mode mobile phone in FIG. 1 further includes a subscriber card module 107 that is configured to perform subscriber identity processing for the TD-SCDMA standard and the GSM standard, where the TD-SCDMA requires the use of a universal subscriber identity module (Universal Subscriber Identity Module, USIM), and the GSM requires the use of a subscriber identity module (Subscriber Identity Module, SIM). The subscriber card module 107 is connected to the TD-SCDMA baseband unit+central processing unit module 101 and performs subscriber identity processing by processing by the CPU. A storage unit 108 is connected to the TD-SCDMA baseband unit+central processing unit module 101. A peripheral 109 is connected to the TD-SCDMA baseband unit+central processing unit module 101. A power management unit (Power Management Unit, PMU) 110 is configured to supply power to the foregoing modules.

The TD-SCDMA/GSM dual-mode mobile phone shown in FIG. 1 can work in both the TD-SCDMA standard and the GSM standard. However, because an independent baseband processing module and an independent radio frequency module are fixedly disposed on the TD-SCDMA/GSM dual-mode mobile phone separately for the TD-SCDMA and the GSM, the TD-SCDMA/GSM dual-mode mobile phone can work only in the TD-SCDMA standard and the GSM standard, but cannot work in other standards such as the LTE and the WCDMA.

FIG. 2 is a schematic structural diagram of another multimode wireless terminal in the prior art. In this example, the multimode wireless terminal is still a TD-SCDMA/GSM dual-mode mobile phone.

As shown in FIG. 2, a baseband unit+CPU module 201 includes these parts: a TD-SCDMA baseband processing unit, a GSM baseband processing unit, and a CPU, where: the CPU is configured to process data of protocol layers, except physical layers, of a TD-SCDMA standard and a GSM standard; the TD-SCDMA baseband processing unit is configured to process data of a physical layer of the TD-SCDMA standard; the GSM baseband processing unit is configured to process data of a physical layer of the GSM standard; and the TD-SCDMA baseband processing unit, the GSM baseband processing unit, and the CPU are integrated into an application-specific integrated circuit (Application Specific Integrated Circuit, ASIC) chip. A T-SCDMA RF module 202 is connected to the baseband unit+CPU module 201 and configured to convert the data of the physical layer of the TD-SCDMA into a TD-SCDMA radio frequency signal or conversely. A GSM RF module 203 is connected to the baseband unit+CPU module 201 and configured to convert the data of the physical layer of the GSM into a GSM radio frequency signal or conversely. An antenna module 204 is separately connected to the TD-SCDMA RF module 202 and the GSM RF module 203 by using an antenna switch 205 and configured to receive and send the TD-SCDMA radio frequency signal and the GSM radio frequency signal.

The TD-SCDMA/GSM dual-mode mobile phone in FIG. 2 further includes a subscriber card module 206 that is configured to perform subscriber identity processing for the TD-SCDMA standard and the GSM standard, where the TD-SCDMA requires the use of a universal subscriber identity module (Universal Subscriber Identity Module, USIM), and the GSM requires the use of a subscriber identity module (Subscriber Identity Module, SIM). The subscriber card module 206 is connected to the baseband unit+CPU module 201 and performs subscriber identity processing by processing by the CPU. A storage unit 207 is connected to the baseband unit+CPU module 201. A peripheral 208 is connected to the baseband unit+CPU module 201. A power management unit (Power Management Unit, PMU) 209 is configured to supply power to the foregoing modules.

In the TD-SCDMA/GSM dual-mode mobile phone shown in FIG. 2, the TD-SCDMA baseband processing unit in the baseband unit+CPU module 201, the TD-SCDMA RF module 202, and the antenna module 204 form a TD-SCDMA link channel; and the GSM baseband processing unit in the baseband unit+CPU module 201, the GSM RF module 203, and the antenna module 204 form a GSM link channel. However, the TD-SCDMA link channel and the GSM link channel work in a manner of time division multiplexing. That is, the TD-SCDMA/GSM dual-mode mobile phone shown in FIG. 2 can work in only one wireless communications standard at a same time. In addition, because a baseband processing module and a radio frequency module are fixedly disposed on the TD-SCDMA/GSM dual-mode mobile phone separately for the TD-SCDMA and the GSM, the TD-SCDMA/GSM dual-mode mobile phone can work only in the TD-SCDMA standard and the GSM standard, but cannot work in other standards such as the LTE and the WCDMA.

It can be seen from the multimode wireless terminals shown in FIG. 1 and FIG. 2 that the multimode wireless terminal in the prior art can work only in a wireless communications standard that is supported by a hardware module fixedly disposed on the multimode wireless terminal. However, multiple standards exist in a current wireless communications network, and as a wireless communications technology develops, more wireless communications standards may emerge. Different multimode wireless terminals need to be deployed in different network environments. Therefore, when a wireless communications network environment changes, a deployed wireless terminal device must be changed, which undoubtedly increases costs of purchasing a new terminal device by an operator and a subscriber.

To resolve the problem that the multimode wireless terminal in the prior art can work only in a network standard that is supported by the hardware module fixedly disposed on the multimode wireless terminal, embodiments of the present invention provides a multimode wireless terminal that adopts a system architecture that includes a general-purpose central processing unit, a reconfigurable baseband processing module, a reconfigurable intermediate radio frequency module, and a reconfigurable antenna module, so that the multimode wireless terminal can work in different wireless communications standards. A universally applicable multimode wireless terminal is provided, which can be used in various wireless communications network environments.

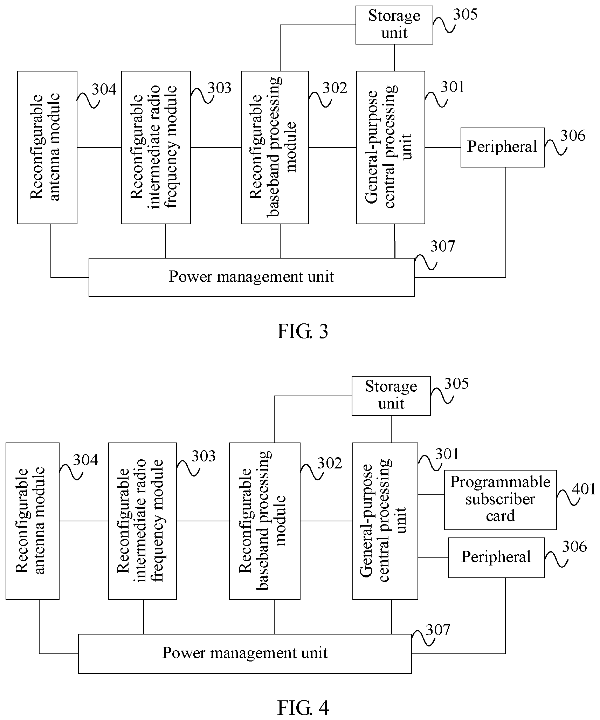

FIG. 3 is a schematic structural diagram of a multimode wireless terminal. As shown in FIG. 3, the multimode wireless terminal includes: a general-purpose central processing unit 301, a reconfigurable baseband processing module 302, a reconfigurable intermediate radio frequency module 303, and a reconfigurable antenna module 304.

The general-purpose central processing unit 301 is configured to determine configuration information of at least one wireless communications standard, and process data of protocol layers, except a physical layer, of the at least one wireless communications standard, where the configuration information of the at least one wireless communications standard includes configuration information of the protocol layers of the at least one wireless communications standard, configuration information of a radio frequency channel corresponding to the at least one wireless communications standard, and configuration information of an antenna combination corresponding to the at least one radio frequency channel.

Specifically, the general-purpose central processing unit 301 is generally a central processing unit of the multimode wireless terminal and has a high computing capability. The general-purpose central processing unit 301 can determine, according to a current wireless network environment that is automatically identified by the multimode wireless terminal or according to setting of a subscriber, the configuration information of the at least one wireless communications standard in the current network environment. When there is only one wireless communications standard in the current environment in which the multimode wireless terminal is located, the general-purpose central processing unit 301 determines configuration information of the wireless communications standard. When there are multiple wireless communications standards in the current environment in which the multimode wireless terminal is located, the general-purpose central processing unit 301 determines configuration information of each wireless communications standard. The configuration information that is of the at least one wireless communications standard and determined by the general-purpose central processing unit 301 includes the configuration information of the protocol layers of the at least one wireless communications standard, the configuration information of the radio frequency channel corresponding to the at least one wireless communications standard, and the configuration information of the antenna combination corresponding to the at least one radio frequency channel. That is, the configuration information that is of the at least one wireless communications standard and needs to be determined by the central processing unit 301 includes all configuration information of a communications link of the at least one wireless communications standard. The reconfigurable baseband processing module 302, the reconfigurable intermediate radio frequency module 303, and the reconfigurable antenna module 304 adjust corresponding configurations according to the configuration information determined by the central processing unit 301, so that the multimode wireless terminal works in a corresponding wireless communications standard. For example, if an environment in which the multimode wireless terminal is currently located is covered only by a TD-SCDMA network, the general-purpose central processing unit 301 only needs to determine configuration information of protocol layers of the TD-SCDMA network, configuration information of a TD-SCDMA radio frequency channel, and configuration information of a TD-SCDMA antenna. For another example, if there are three wireless communications networks in an environment in which the multimode wireless terminal is currently located: a TD-SCDMA network, a GSM network, and a Wireless Fidelity (Wireless Fidelity, WiFi) network, and the multimode wireless terminal needs to work in two networks: the TD-SCDMA network and the GSM network, the general-purpose central processing unit 301 needs to determine the configuration information of the protocol layers of the TD-SCDMA network, the configuration information of the TD-SCDMA radio frequency channel, and configuration information of the TD-SCDMA antenna, and also needs to determine configuration information of protocol layers of the GSM network, configuration information of a GSM radio frequency channel, and configuration information of a GSM antenna.

After determining the configuration information of the at least one wireless communications standard, the general-purpose central processing unit 301 processes the data of the protocol layers, except the physical layer, of the at least one wireless communications standard according to the configuration information of the protocol layers of the at least one wireless communications standard. The current communications networks all adopt a seven-layer network architecture of the Open Systems Interconnection (Open System Interconnect, OSI), and the general-purpose central processing unit 301 is configured to process the data of the protocol layers, except the physical layer, of the at least one wireless communications standard. Generally, the general-purpose central processing unit 301 is a main processor of the multimode wireless terminal and has a high computing capability. Therefore, no matter how many networks with wireless communications standards the multimode wireless terminal works in, the central processing unit 301 is capable of processing data of protocol layers, except physical layers, of multiple wireless communications standards.

The reconfigurable baseband processing module 302 is configured to reconfigure, according to configuration information that is of the physical layer of the at least one wireless communications standard and determined by the general-purpose central processing unit 301, a capability for processing data of the physical layer of the at least one wireless communications standard; and process the data of the physical layer of the at least one wireless communications standard, that is, process uplink data sent by the general-purpose central processing unit 301 into uplink data of the physical layer and send the uplink data of the physical layer to the reconfigurable intermediate radio frequency module 303, and process downlink data that is of the physical layer and sent by the reconfigurable intermediate radio frequency module 303 into downlink data and send the downlink data to the general-purpose central processing unit 301. Specifically, the reconfigurable baseband processing module 302 may be a processor that has a high computing capability, such as a general-purpose X86 processor, advanced reduced instruction set computing machines (Advanced RISC Machines, ARM), or a digital signal processing (Digital Signal Processing, DSP) chip. In this embodiment, the DSP chip is used as an example for description. The reconfigurable baseband processing module 302 may include one or more DSP chips, where the DSP chip may be single-core, or may be multi-core. The general-purpose central processing unit 301 determines the configuration information of the protocol layers of the at least one wireless communications standard, where the configuration information includes the configuration information of the physical layer that is determined. The reconfigurable baseband processing module 302 can reconfigure, according to the configuration information of the physical layer of the at least one wireless communications standard, the processing capability of the reconfigurable baseband processing module 302, configure a corresponding processing capability for a physical layer of each wireless communications standard, and process data of the physical layer of each wireless communications standard. If the general-purpose central processing unit 301 determines that the multimode wireless terminal works in only one wireless communications standard, the reconfigurable baseband processing module 302 may use all processing capabilities to process data of a physical layer of the wireless communications standard. If the general-purpose central processing unit 301 determines that the multimode wireless terminal works in multiple wireless communications standards, the reconfigurable baseband processing module 302 allocates different processing capabilities for wireless communications standards according to configuration information that is of physical layers of the wireless communications standards and determined by the general-purpose central processing unit 301.

As for an uplink in wireless communications, the reconfigurable baseband processing module 302 processes the uplink data sent by the general-purpose central processing unit 301 into the uplink data of the physical layer and sends the uplink data of the physical layer to the reconfigurable intermediate radio frequency module 303. As for a downlink in the wireless communications, the reconfigurable baseband processing module 302 processes the downlink data that is of the physical layer and sent by the reconfigurable intermediate radio frequency module 303 into the downlink data and sends the downlink data to the general-purpose central processing unit 301.

The reconfigurable intermediate radio frequency module 303 is configured to reconfigure, according to the configuration information that is of the radio frequency channel corresponding to the at least one wireless communications standard and is determined by the general-purpose central processing unit 301, a central frequency and bandwidth of the radio frequency channel corresponding to the at least one wireless communications standard, provide the radio frequency channel corresponding to the at least one wireless communications standard, convert the uplink data that is of the physical layer and sent by the reconfigurable baseband processing module 302 into an uplink radio frequency signal and send the uplink radio frequency signal to the reconfigurable antenna module 304, and convert a downlink radio frequency signal sent by the reconfigurable antenna module 304 into downlink data of the physical layer and send the downlink data of the physical layer to the reconfigurable baseband processing module 302. Specifically, the reconfigurable intermediate radio frequency module 303 may include at least one radio frequency transceiver whose frequency and bandwidth are changeable or at least one radio frequency integrated circuit (Radio Frequency Integrated Circuit, RFIC) whose frequency and bandwidth are changeable. After determining the configuration information of the radio frequency channel corresponding to the at least one wireless communications standard, the general-purpose central processing unit 301 sends the configuration information to the reconfigurable intermediate radio frequency module 303, or sends the configuration information to the reconfigurable intermediate radio frequency module 303 by using the reconfigurable baseband processing module 302. The reconfigurable intermediate radio frequency module 303 provides multiple radio frequency channels, allocates a radio frequency channel for the at least one wireless communications standard according to the configuration information, and reconfigures the radio frequency channel into a frequency and bandwidth that are corresponding to the at least one wireless communications standard. When the multimode wireless terminal works in only one wireless communications standard, all the radio frequency channels of the reconfigurable intermediate radio frequency module 303 can work in the wireless communications standard. In this case, the reconfigurable intermediate radio frequency module 303 configures, according to a working frequency and a working bandwidth that are required by the wireless communications standard, the radio frequency channels as radio frequency channels corresponding to the wireless communications standard. When the multimode wireless terminal works in multiple wireless communications standards, the reconfigurable intermediate radio frequency module 303 needs to allocate the radio frequency channels to each wireless communications standard according to a requirement of each wireless communications standard, and configures, according to a working frequency and working bandwidth that are required by each wireless communications standard, a radio frequency channel as a radio frequency channel corresponding to each wireless communications standard, where a sum of all the radio frequency channels corresponding to the wireless communications standards must not exceed a total quantity of the radio frequency channels that can be provided by the reconfigurable intermediate radio frequency module 303. For example, if the multimode wireless terminal works in both the TD-SCDMA standard and the GSM standard, the reconfigurable intermediate radio frequency module 303 can provide four radio frequency channels in total, can allocate two radio frequency channels to each of the TD-SCDMA and the GSM, and set frequencies and bandwidth of the radio frequency channels to frequency bands that are corresponding to the TD-SCDMA standard and the GSM standard respectively.

After the radio frequency channels are allocated, as for the uplink in the wireless communications, the reconfigurable intermediate radio frequency module 303 converts, by means of processing such as digital-to-analog conversion, radio frequency modulation, up-conversion, amplification, and filtering, the uplink data that is of the physical layer and sent by the reconfigurable baseband processing module 302 into the uplink radio frequency signal, and sends the uplink radio frequency signal to the reconfigurable antenna module 304; as for the downlink in the wireless communications, the reconfigurable intermediate radio frequency module 303 coverts, by means of processing such as filtering, amplification, down-conversion, radio frequency demodulation, and digital-to-analog conversion, the downlink radio frequency signal sent by the reconfigurable antenna module 304 into the downlink data of the physical layer and sends the downlink data of the physical layer to the reconfigurable baseband processing module 302.

To enable the multimode wireless terminal to be applicable to various wireless communications standards, each radio frequency channel of the reconfigurable intermediate radio frequency module 303 requires an adjustable frequency band of at least 0 GHz to 6 GHz, a bandwidth of at least 20 MHz and a processing capability that supports two transmit two receive (2 Transmit 2 Receive, 2T2R) and multiple-input multiple-output (Multiple-Input Multiple-Output, MIMO). The reconfigurable antenna module 304 is configured to reconfigure, according to the configuration information that is of the antenna combination corresponding to the at least one radio frequency channel and is determined by the general-purpose central processing unit 301, the antenna combination corresponding to the at least one radio frequency channel, transmit the uplink radio frequency signal converted by the reconfigurable baseband processing module 303, and send the received downlink radio frequency signal to the reconfigurable intermediate radio frequency module 303.

Specifically, the reconfigurable antenna module 304 includes multiple antenna units and an antenna switch module. After determining the configuration information of the antenna combination corresponding to the at least one radio frequency channel, the general-purpose central processing unit 301 sends the configuration information to the reconfigurable antenna module 304. The antenna switch module of the reconfigurable antenna module 304 reconfigures, according to the configuration information, the multiple antenna units into the antenna combination corresponding to the at least one radio frequency channel. When the multimode wireless terminal works in one wireless communications standard, all the antenna units of the reconfigurable antenna module 304 may work for the radio frequency channel corresponding to the wireless communications standard. When the multimode wireless terminal works in multiple wireless communications standards, the reconfigurable antenna module 304 needs to reconfigure, according to a quantity of antennas required by the radio frequency channel corresponding to each wireless communications standard, the multiple antenna units as an antenna combination corresponding to each radio frequency channel, where one antenna combination receives and sends radio frequency data for one radio frequency channel.

As for the uplink in the wireless communications, the reconfigurable antenna module 304 transmits the uplink radio frequency signal converted by the reconfigurable baseband processing module 303; as for the downlink in the wireless communications, the reconfigurable antenna module 304 sends the received downlink radio frequency signal to the reconfigurable intermediate radio frequency module 303.

In addition, the multimode wireless terminal may further include modules such as a storage unit 305, a peripheral 306, and a power management unit 307, where: the storage unit 305 is connected to the general-purpose central processing unit 301 and the reconfigurable baseband processing module 302, and provides a data storage service; the peripheral 306 includes devices such as a keyboard, a camera, a microphone, a loudspeaker, and a display screen, and the peripheral 306 is connected to the central processing unit 301 and provides services such as input, output, and external storage; and the power management unit 307 is connected to other modules and configured to supply power to these modules.

In this circuit, the general-purpose central processing unit 301, the reconfigurable baseband processing module 302, the reconfigurable intermediate radio frequency module 303, and the reconfigurable antenna module 304 can all adjust configuration information according to the environment in which the multimode wireless terminal is currently located, so that the multimode wireless terminal can work in any wireless communications network. A single processing unit or module has a limited processing capability. Therefore, both the reconfigurable baseband processing module 302 and the reconfigurable intermediate radio frequency module 303 may be formed by combining multiple independent processing units or modules. The multimode wireless terminal has two working modes: an asynchronous concurrent mode and a channel synchronization aggregation mode. When the multimode wireless terminal needs to work in multiple wireless communications standards, the asynchronous concurrent mode is used. In this case, the modules in the multimode wireless terminal form multiple communications links by adjusting the configuration information, and each communications link works independently and is not affected by another communication link. When the multimode wireless terminal works in only one wireless communications standard, the channel synchronization aggregation mode is used. In this case, the modules in the multimode wireless terminal jointly form a communications link, and processing subunits of the modules jointly perform processing.

In this circuit, a general-purpose central processing unit, a reconfigurable baseband processing module, a reconfigurable intermediate radio frequency module, and a reconfigurable antenna module are disposed on the multimode wireless terminal, so that the multimode wireless terminal can work in at least one wireless communications standard; because the modules can reconfigure, according to configuration information of a wireless communications standard, a processing capability and configuration of the modules, the multimode wireless terminal can work in any one or more wireless communications standards. Therefore, the multimode wireless terminal provided in this embodiment is applicable to any network environment, and when the network environment changes, the multimode wireless terminal does not need to be replaced, which saves costs to replace the device.

FIG. 4 is a schematic structural diagram of a multimode wireless terminal. As shown in FIG. 4, based on FIG. 3, the multimode wireless terminal further includes a programmable subscriber card 401.

The programmable subscriber card 401 is configured to perform subscriber identity processing for at least one wireless communications standard.

Specifically, as for each wireless communications standard, an operator needs to identify a subscriber, so as to perform processing, such as authority allocation and charging, on the subscriber. The programmable subscriber card 401 is connected to a general-purpose central processing unit 301, and performs subscriber identity processing for wireless communications standards determined by the general-purpose central processing unit 301. The programmable subscriber card 401 can simultaneously perform subscriber identity processing for multiple wireless communications standards.

Generally, a subscriber card in the prior art is an independent subscriber card. Each subscriber card can perform subscriber identity processing for only one wireless communications standard, and subscriber cards of different standards may also be used in different wireless communications standards. For example, a TD-SCDMA requires the use of a USIM card, and a GSM requires the use of a SIM card. Therefore, an independent subscriber card needs to be disposed for each network standard; and, to enable the multimode wireless terminal to work in any wireless communications standard, a quantity of disposed subscriber cards must be the same as a quantity of current wireless communications standards. In this embodiment, the programmable subscriber card 401 is disposed, which can be set to simultaneously perform subscriber identity processing for multiple wireless communications standards. Therefore, the multimode wireless terminal does not need to be configured with a large quantity of subscriber cards, which saves a system resource.

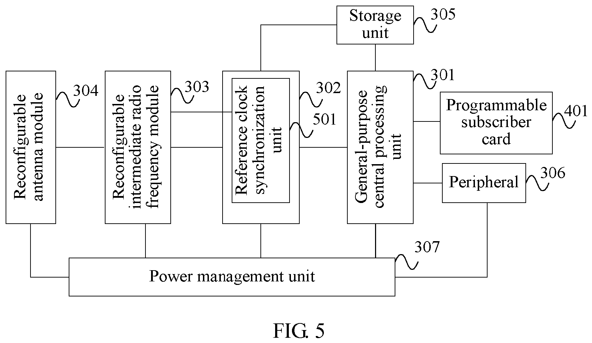

FIG. 5 is a schematic structural diagram of a multimode wireless terminal. As shown in FIG. 5, the multimode wireless terminal is based on FIG. 4; a reconfigurable baseband processing module 302 includes a reference clock synchronization unit 501, where the reference clock synchronization unit 501 is configured to synchronize reference clock information between the reconfigurable baseband processing module 302 and a reconfigurable intermediate radio frequency module 303.

Specifically, to enable a wireless communications link to work properly, a baseband signal and a radio frequency signal of the link must use a same clock signal. To ensure clock synchronization in the communications link, the modules need to use a same reference clock source. In this embodiment, the reconfigurable baseband processing module 302 includes the reference clock synchronization unit 501, where the reference clock synchronization unit 501 is configured to generate a reference clock signal; and the reconfigurable baseband processing module 302 needs to send the reference clock signal to the reconfigurable intermediate radio frequency module 303, so that the reconfigurable baseband processing module 302 and the reconfigurable intermediate radio frequency module 303 use a same reference clock signal. In this way, no matter the multimode wireless terminal works in an asynchronous concurrent mode or a channel synchronization aggregation mode, a formed wireless communications link can ensure clock synchronization, thereby ensuring that the multimode wireless terminal works properly.

When the reconfigurable baseband processing module 302 and the reconfigurable intermediate radio frequency module 303 need to synchronize reference clock information, the reference clock synchronization unit 501 sends a synchronizing pulse to the reconfigurable intermediate radio frequency module 303. When a rising edge of a clock signal of the reconfigurable intermediate radio frequency module 303 is aligned with a rising edge of the synchronizing pulse sent by the reference clock synchronization unit 501, the reconfigurable intermediate radio frequency module 303 sends feedback information to the reference clock synchronization unit 501 and completes the synchronizing operation.

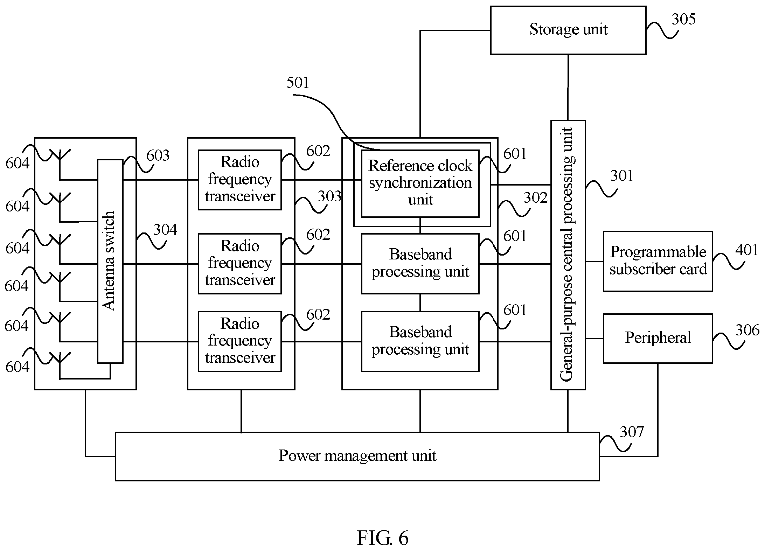

FIG. 6 is a schematic structural diagram of a multimode wireless terminal according to an embodiment of the present invention. As shown in FIG. 6, the multimode wireless terminal in this embodiment is based on FIG. 5; a reconfigurable baseband processing module 302 includes multiple baseband processing units 601, a reconfigurable intermediate radio frequency module 303 includes multiple radio frequency transceivers 602 whose frequencies and bandwidth are changeable, and a reconfigurable antenna module 304 includes an antenna switch 603 and multiple antennas 604.

Generally, an independent baseband processing unit 601 and an independent radio frequency transceiver 602 have limited processing capabilities. To enable the multimode wireless terminal to work in various wireless communications networks, multiple independent baseband processing units 601 need to be combined into the reconfigurable baseband processing module 302, and multiple independent radio frequency transceivers 602 needs to be combined into the reconfigurable intermediate radio frequency module 303. The baseband processing units 601 are connected to a general-purpose central processing unit 301 by using a high speed input/output (Input Output, IO) interface, where the high speed IO interface may be, for example, a serial rapid IO (Serial Rapid I/O, SRIO) interface or a gigabit media independent interface (Gigabit Media Independent Interface, GMII). The baseband processing units 601 are connected to each other by using a high speed IO interface. The baseband processing units 601 are connected to the radio frequency transceivers 602 by using an interface, such as an in-phase/quadrature (In-phase/Quadrature, I/Q) data interface, a serial peripheral interface (Serial Peripheral Interface, SPI), or a synchronization interface, where: the I/Q data interface is configured to transmit a radio frequency signal or a baseband signal and includes a radio frequency/baseband interface in standards, such as the Joint Electron Device Engineering Council Standards (Joint Electron Device Engineering Council Standards, JESD) 207 or a digital radio frequency (Digital Radio Frequency, DigRF); the SPI is configured to transmit operation control information; and the synchronization interface is configured to transmit synchronization information. The radio frequency transceivers 602 are separately connected to the antenna switch 603 by using a radio frequency interface. A reference clock synchronization unit 501 is located in any baseband processing unit 601.

When the multimode wireless terminal works in an asynchronous concurrent mode, it is assumed that each baseband processing unit 601 can independently process data of a physical layer of a wireless communications standard, and that each radio frequency transceiver 602 can independently provide a radio frequency channel for a wireless communications standard. Each baseband processing unit 601 can exchange data with the general-purpose central processing unit 301 in the wireless communications standard, and all the baseband processing units 601 synchronize reference clock information by using a reference clock synchronization unit 501. Each radio frequency transceiver 602 is connected to one baseband processing unit 601, receives baseband data over the I/Q data interface, receives the control information over the SPI interface, and receives the synchronization information over the synchronization interface, where reference clock information of all the radio frequency transceivers 602 is sent by the reference clock synchronization unit 501. Each radio frequency transceiver 602 is connected to a required quantity of antennas 604 by using the antenna switch 603. In this way, one baseband processing unit 601, one radio frequency transceiver 602, and multiple antennas 604 form one wireless communications link. Each wireless communications link works independently and is not affected by another wireless communications link. The multimode wireless terminal can simultaneously work in multiple wireless communications standards.

When the multimode wireless terminal works in a channel synchronization aggregation mode, it is assumed that: the multimode wireless terminal works in one wireless communications standard, processing capabilities of all the baseband processing units 601 need to be combined to jointly process data of a physical layer, channels of all the radio frequency transceivers 602 need to be combined to jointly form a radio frequency channel, and all the antennas needs to simultaneously work in the wireless communications standard. In this case, each baseband processing unit 601 is connected to the general-purpose central processing unit 301, the baseband processing units 601 transmit the data of the physical layer to each other over the high speed IO interface, and all the baseband processing units 601 synchronize the reference clock information by using the reference clock synchronization unit 501, which is equivalent to that the capabilities of the multiple baseband processing units 601 are integrated into a baseband processing unit with a high processing capability, so as to jointly process the data of the physical layer of the wireless communications standard. Each radio frequency transceiver 602 is connected to one baseband processing unit 601, receives the baseband data over the I/Q data interface, receives the control information over the SPI interface, and receives the synchronization information over the synchronization interface. The reference clock information of all the radio frequency transceivers 602 is sent by the reference clock synchronization unit 501. All the radio frequency transceivers 602 set frequencies to frequencies applicable to the wireless communications standard, which is equivalent to that bandwidth of each radio frequency transceiver 602 is added up to form bandwidth for the wireless communications standard. Each radio frequency transceiver 602 is respectively connected to all the antennas 604 by using the antenna switch 603. In this way, each baseband processing unit 601, each radio frequency transceiver 602, and each antenna 604 jointly form one wireless communications link, and the units work jointly, so that the multimode wireless terminal works in the wireless communications standard. A processing capability for the wireless communications standard is a sum of the processing capabilities of all the baseband processing units 601, and the bandwidth for the wireless communications standard is a sum of the bandwidth of all the radio frequency transceivers 602. In addition, all the antennas 604 can be used.

For example, the reconfigurable baseband processing module 302 on the multimode wireless terminal includes two DSP chips, and each chip can independently complete processing of the data of the physical layer of the wireless communications standard. The reconfigurable intermediate radio frequency module 303 includes two radio frequency transceivers, and each radio frequency transceiver supports a maximum of two radio frequency channels, where each radio frequency channel has a bandwidth of 20 MHz. The reconfigurable antenna module 304 includes four antennas. When the multimode wireless terminal needs to work in both an LTE mode and a TD-WCDMA mode, one DSP chip, one radio frequency transceiver, and two antennas may form a two-antenna 2T2R LTE communications link whose bandwidth is 20 MHz, and another DSP chip, another radio frequency transceiver, and another two antennas form a 2T2R TD-WCDMA communications link whose bandwidth is 20 MHz. These two communications links work synchronously and concurrently. If a network environment in which the multimode wireless terminal is located changes, and the multimode wireless terminal needs to work only in an LTE network, the modules may be reconfigured: The two DSP chips, the two radio frequency transceivers, and the four antennas jointly form an LTE communications link, where a processing capability of the new LTE communications link is a sum of capabilities of all the units, and bandwidth of the new LTE communications link is a sum of bandwidth of all the units, that is, the channel synchronization aggregation mode is used. The newly formed LTE communications link may be, to a maximum extent, a four-antenna 4T4R LTE communications link whose bandwidth is 40 MHz, so as to improve a data throughput capability of the new LTE communications link. Table 1 is a table of comparing a data throughput rate of two channels and that of four channels.

**Table 1**

| **Quantity of channels** | **Modulat ion manner** | **Code rate** | **Bandwidth (20 MHz) GI = 800 ns** | **Bandwidth (20 MHz) GI = 400 ns** | **Bandwi dth (40 MHz) GI = 800 ns** | **Bandwid th (40 MHz) GI = 400 ns** |
|---|---|---|---|---|---|---|
| 2 | 64 QAM | 5/6 | 130 Mbps | 144.4 Mbps | 270 Mbps | 300 Mbps |
| 4 | 64 QAM | 5/6 | 260 Mbps | 288.9 Mbps | 540 Mbps | 600 Mbps |

It can be seen from Table 1 that in a same modulation manner, when two channels are used, each channel has a bandwidth of 20 MHz, and a guard interval (Guard Interval, GI) is 400 ns, the data throughput rate is 144.4 Mbps; when four channels are used, each channel has a bandwidth of 40 MHz, and a guard interval (Guard Interval, GI) is 400 ns, the data throughput rate is 600 Mbps. That is, if the channel synchronization aggregation mode is not adopted, the data throughput rate of the two independent wireless communications links that are formed by independent units of the modules in the multimode wireless terminal may reach only 144.4 Mbps * 2 = 288.8 Mbps. However, if the channel synchronization aggregation mode is adopted, the multimode wireless terminal with a same configuration may provide a data throughput rate of 600 Mbps.

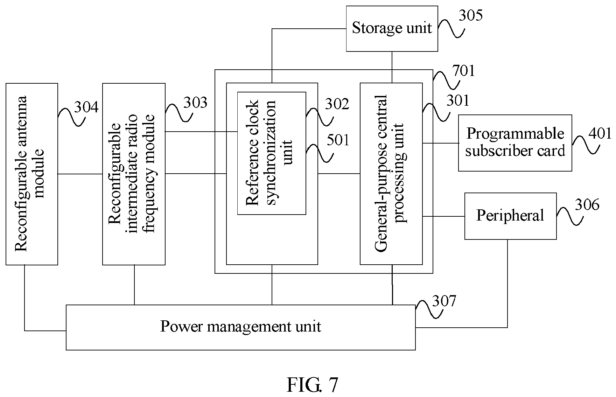

FIG. 7 is a schematic structural diagram of a multimode wireless terminal according to an embodiment of the present invention. As shown in FIG. 7, the multimode wireless terminal in this embodiment is based on FIG. 5; a baseband processing module 302 includes a multi-core DSP chip; a general-purpose central processing unit 301 and the reconfigurable baseband processing module 302 form an ASIC 701; and multiple radio frequency transceivers of a reconfigurable intermediate radio frequency module 303 jointly form an RFIC, where frequencies and bandwidth of the multiple radio frequency transceivers are changeable.

Specifically, because the general-purpose central processing unit 301 and the reconfigurable baseband processing module 302 form the ASIC 701, the general-purpose central processing unit 301 and the reconfigurable baseband processing module 302 may exchange data in a direct memory access (Direct Memory Access, DMA) manner. When the reconfigurable baseband processing module 302 needs to process data of physical layers of multiple wireless communications standards, data exchange between multiple physical layers may also be performed in the DMA manner. Because a data storage speed is very high in the DMA manner, the data exchange in the DMA manner may reduce time consumed in the data exchange. The multiple radio frequency transceivers of the reconfigurable intermediate radio frequency module 303 jointly form the RFIC. In this way, only one group of interfaces is required between the reconfigurable baseband processing module 302 and the reconfigurable intermediate radio frequency module 303, which saves a system resource.

Further, in the foregoing embodiments, if the reconfigurable baseband processing module 302 is configured to process data of physical layers of at least two wireless communications standards, the reconfigurable baseband processing module 302 is further configured to exchange the data of the physical layers between the at least two wireless communications standards. Specifically, in the prior art, data exchange between multiple wireless communications standards needs to be performed at an upper-layer protocol layer, for example, an application layer or a network layer. However, in this case, data needs to be exchanged after a protocol conversion, and consequently, a delay exists in the data exchange process and a system resource is consumed. In the multimode wireless terminal provided in the present invention, the reconfigurable baseband processing module 302 may implement exchanging of data of the physical layers between multiple wireless communications standards, which saves time in the protocol conversion of the data and saves a system resource that needs to be used for the protocol conversion. For example, the multimode wireless terminal is a Relay node and works in both an LTE network and a WiFi network. The multimode wireless terminal can receive an LTE signal, convert the received LTE signal to data of a physical layer, and exchange data of the LTE physical layer to a WiFi link by exchanging data between physical layers, so that a subscriber in the WiFi network can use the LTE network to perform data upload or download service, which reduces time and a system resource that are consumed for performing upper-layer protocol conversion and then performing wireless network standard conversion on the data.

Further, in the foregoing embodiments, the reconfigurable baseband processing module 302 includes at least one DSP chip. Specifically, the DSP chip has advantages such as a high computing speed, cost effectiveness, and a small size. Therefore, the reconfigurable baseband processing module 302 formed by using multiple DSP chips also has advantages such as a high computing speed, cost effectiveness, and a small size. The reconfigurable baseband processing module 302 may include a single-core DSP chip, or may include a multi-core DSP chip. However, the at least one DSP chip included in the reconfigurable baseband processing module 302 needs to be a DSP chip of a same model, so as to reconfigure baseband processing parts for multiple wireless communications standards.

Further, in the foregoing embodiments, the reconfigurable intermediate radio frequency module 303 includes at least one radio frequency transceiver whose frequency and bandwidth are adjustable or at least radio frequency integrated circuit RFIC whose frequency and bandwidth are adjustable.

Further, in the foregoing embodiments, the reference clock synchronization unit 501 is specifically configured to synchronize reference clock information between the at least one DSP chip and the at least one radio frequency transceiver whose frequency and bandwidth are adjustable or the at least one RFIC whose frequency and bandwidth are adjustable. Specifically, if the reconfigurable baseband processing module 302 includes multiple DSP chips, and the reconfigurable intermediate radio frequency module 303 includes multiple radio frequency transceivers whose frequencies and bandwidth are adjustable or RFICs whose frequencies and bandwidth are adjustable, the reference clock synchronization unit 501 is located in any DSP chip, and other DSP chips and the radio frequency transceivers or the RFICs all need the reference clock synchronization unit 501 to synchronize reference clock information, so as to ensure reference clock synchronization of the entire multimode wireless terminal. The scope of protection is defined by the appended claims.

## Claims

1. A multimode wireless terminal, comprising:
a general-purpose central processing unit (301), a reconfigurable baseband processing module (302), a reconfigurable intermediate radio frequency module (303), and a reconfigurable antenna module (304), wherein:
the general-purpose central processing unit (301) is configured to determine configuration information of at least one wireless communications standard, wherein the configuration information of the at least one wireless communications standard comprises configuration information of the protocol layers of the at least one wireless communications standard, configuration information of a radio frequency channel corresponding to the at least one wireless communications standard, and configuration information of an antenna combination corresponding to the at least one radio frequency channel;
the general-purpose central processing unit (301) is further configured to process uplink data and downlink data of protocol layers, except a physical layer, of the at least one wireless communications standard;
the reconfigurable baseband processing module (302) is a processor, wherein the processor is at least one of a general-purpose X86 processor, advanced reduced instruction set computing machine, ARM, or a digital signal processing, DSP, chip;
the reconfigurable baseband processing module (302) is configured to, according to configuration information that is of the physical layer of the at least one wireless communications standard and determined by the general-purpose central processing unit (301), process uplink data sent by the general-purpose central processing unit (301) into uplink data of the physical layer and send the uplink data of the physical layer to the reconfigurable intermediate radio frequency module (303), and process downlink data that is of the physical layer and sent by the reconfigurable intermediate radio frequency module (303) into downlink data and send the downlink data to the general-purpose central processing unit (301);
the reconfigurable intermediate radio frequency module (303) comprises at least two radio frequency transceivers whose frequency and bandwidth are adjustable;
the reconfigurable intermediate radio frequency module (303) is configured to reconfigure, according to the configuration information that is of the radio frequency channel corresponding to the at least one wireless communications standard and is determined by the general-purpose central processing unit (301), a central frequency and bandwidth of the radio frequency channel corresponding to the at least one wireless communications standard, provide the radio frequency channel corresponding to the at least one wireless communications standard, convert the uplink data that is of the physical layer and sent by the reconfigurable baseband processing module (302) into an uplink radio frequency signal and send the uplink radio frequency signal to the reconfigurable antenna module (304), and convert a downlink radio frequency signal sent by the reconfigurable antenna module (304) into downlink data of the physical layer and send the downlink data of the physical layer to the reconfigurable baseband processing module (302);
the reconfigurable antenna module (304) includes four antennas (604) and an antenna switch module and is configured for supporting two transmit two receive, 2T2R, and multiple-input multiple-output, MIMO, transmission, and the antenna switch module of the reconfigurable antenna module (304) is configured to reconfigure, according to the configuration information that is of the antenna combination corresponding to the at least one radio frequency channel and is determined by the general-purpose central processing unit (301), the multiple antennas (604) into the antenna combination corresponding to the at least one radio frequency channel; and
the reconfigurable antenna module (304) is configured to transmit the uplink radio frequency signal converted by the reconfigurable intermediate radio frequency module (303), and send the received downlink radio frequency signal to the reconfigurable intermediate radio frequency module (303)
wherein
the multimode wireless terminal is configured to work in two modes: concurrent Long Term Evolution, LTE, and Time Division-Wideband Code Division Multiple Access, TD-WCDMA, mode, and LTE alone mode;
wherein
if the multimode wireless terminal needs to work in both an LTE mode and an TD-WCDMA mode, the terminal is configured such that one radio frequency transceiver, and two antennas, are configured to form a two-antenna 2T2R LTE communications link, and another radio frequency transceiver, and another two antennas, are configured to form another two antenna 2T2R TC-WCDMA communications link such that the terminal is adapted to work synchronously and concurrently in the two standards; and
if the multimode wireless terminal needs to work only in an LTE network, the at least two radio frequency transceivers, and the four antennas, are configured to jointly form an LTE communications link, where a bandwidth of the new LTE communications link is a sum of the bandwidths of the at least two radio frequency transceivers such that a data throughput capability of the new LTE communications link is improved.

2. The multimode wireless terminal according to claim 1, further comprising:
a programmable subscriber card, configured to perform subscriber identity processing for the at least one wireless communications standard.

3. The multimode wireless terminal according to claim 1 or 2, wherein the reconfigurable baseband processing module (302) comprises a reference clock synchronization unit (501), and the clock synchronization unit (501) is configured to synchronize reference clock information between the reconfigurable baseband processing module (302) and the reconfigurable intermediate radio frequency module (303).

4. The multimode wireless terminal according to any one of claims 1 to 3, wherein: if the reconfigurable baseband processing module (302) is configured to process data of physical layers of both an LTE mode and an TD-WCDMA mode, the reconfigurable baseband processing module (302) is further configured to exchange the data of the physical layers between the LTE mode and the TD-WCDMA mode.

5. The multimode wireless terminal according to claim 3, wherein the reconfigurable baseband processing module (302) comprises at least two DSP chips and the clock synchronization unit (501) is specifically configured to synchronize reference clock information between the DSP chips and the at least two radio frequency transceivers whose frequency and bandwidth are adjustable.

6. The multimode wireless terminal according to claim 5, wherein the reference clock synchronization unit (501) is located in any DSP chip on the reconfigurable baseband processing module (302).

7. The multimode wireless terminal according to any one of claims 1 to 6, wherein the general-purpose central processing unit (301) and the reconfigurable baseband processing module (302) are packaged as an application-specific integrated circuit ASIC.

8. The multimode wireless terminal according to any one of claims 1 to 7, wherein each radio frequency channel of the reconfigurable intermediate radio frequency module (303) has an adjustable frequency band of at least 0 GHz to 6 GHz, a bandwidth of at least 20 MHz and a processing capability that supports 2T2R and MIMO.

## Patentansprüche

1. Drahtloses Multimode-Endgerät, umfassend:
eine universelle zentrale Recheneinheit (301), ein rekonfigurierbares Basisband-Verarbeitungsmodul (302), ein rekonfigurierbares Modul mittlerer Hochfrequenz (303) und ein rekonfigurierbares Antennenmodul (304), wobei:
die universelle zentrale Recheneinheit (301) dazu konfiguriert ist, Konfigurationsinformationen mindestens eines Standards drahtloser Kommunikation zu ermitteln, wobei die Konfigurationsinformationen des mindestens einen Standards drahtloser Kommunikation Konfigurationsinformationen der Protokollschichten des mindestens einen Standards drahtloser Kommunikation, Konfigurationsinformationen eines Hochfrequenzkanals, der dem mindestens einen Standard drahtloser Kommunikation entspricht, und Konfigurationsinformationen einer Antennenkombination, die dem mindestens einen Hochfrequenzkanal entspricht, umfassen,
die universelle zentrale Recheneinheit (301) ferner dazu konfiguriert ist, "Uplink"-Daten und "Downlink"-Daten von Protokollschichten des mindestens einen Standards drahtloser Kommunikation mit Ausnahme einer physischen Schicht zu verarbeiten,
das rekonfigurierbare Basisband-Verarbeitungsmodul (302) ein Prozessor ist, wobei der Prozessor mindestens eines von einem universellen X86-Prozessor, einer hochentwickelten Rechenmaschine mit reduziertem Befehlssatz (Advanced Reduced Instruction Set Computing Machine, ARM) oder einem Chip zur digitalen Signalverarbeitung (Digital Signal Processing, DSP) ist,
das rekonfigurierbare Basisband-Verarbeitungsmodul (302) dazu konfiguriert ist, gemäß Konfigurationsinformationen, die zur physischen Schicht des mindestens einen Standards drahtloser Kommunikation gehören und von der universellen zentralen Recheneinheit (301) ermittelt wurden, "Uplink"-Daten, die von der universellen zentralen Recheneinheit (301) gesendet wurden, zu "Uplink"-Daten der physischen Schicht zu verarbeiten und die "Uplink"-Daten der physischen Schicht an das rekonfigurierbare Modul mittlerer Hochfrequenz (303) zu senden, und "Downlink"-Daten, die zu der physischen Schicht gehören und von dem rekonfigurierbaren Modul mittlerer Hochfrequenz (303) gesendet wurden, zu "Downlink"-Daten zu verarbeiten und die "Downlink"-Daten an die universelle zentrale Recheneinheit (301) zu senden,
das rekonfigurierbare Modul mittlerer Hochfrequenz (303) mindestens zwei Hochfrequenz-Sendeempfänger umfasst, deren Frequenz und Bandbreite justierbar sind,
das rekonfigurierbare Modul mittlerer Hochfrequenz (303) dazu konfiguriert ist, gemäß den Konfigurationsinformationen, die zu dem Hochfrequenzkanal gehören, der dem mindestens einen Standard drahtloser Kommunikation entspricht, und die von der universellen zentralen Recheneinheit (301) ermittelt werden, eine Mittenfrequenz und Bandbreite des Hochfrequenzkanals, der dem mindestens einen Standard drahtloser Kommunikation entspricht, zu rekonfigurieren, den Hochfrequenzkanal, der dem mindestens einen Standard drahtloser Kommunikation entspricht, bereitzustellen, die "Uplink"-Daten, die zu der physischen Schicht gehören und von dem rekonfigurierbaren Basisband-Verarbeitungsmodul (302) gesendet wurden, in ein "Uplink"-Hochfrequenzsignal umzuwandeln und das "Uplink"-Hochfrequenzsignal an das rekonfigurierbare Antennenmodul (304) zu senden und ein "Downlink"-Hochfrequenzsignal, das von dem rekonfigurierbaren Antennenmodul (304) gesendet wurde, in "Downlink"-Daten der physischen Schicht umzuwandeln und die "Downlink"-Daten der physischen Schicht an das rekonfigurierbare Basisband-Verarbeitungsmodul (302) zu senden,
das rekonfigurierbare Antennenmodul (304) vier Antennen (604) und ein Antennenumschaltmodul beinhaltet und zum Unterstützen von 2-fach-Senden-und-Empfangen-, 2T2R-, und "Multiple-Input-Multiple-Output"-, MIMO-, Übertragung konfiguriert ist und das Antennenumschaltmodul des rekonfigurierbaren Antennenmoduls (304) dazu konfiguriert ist, gemäß den Konfigurationsinformationen, die zu der Antennenkombination gehören, die dem mindestens einen Hochfrequenzkanal entspricht und von der universellen zentralen Recheneinheit (301) ermittelt wird, die mehreren Antennen (604) zu der Antennenkombination zu rekonfigurieren, die dem mindestens einen Hochfrequenzkanal entspricht, und
das rekonfigurierbare Antennenmodul (304) dazu konfiguriert ist, das "Uplink"-Hochfrequenzsignal, das von dem rekonfigurierbaren Modul mittlerer Hochfrequenz (303) umgewandelt wurde, zu übertragen und das empfangene "Downlink"-Hochfrequenzsignal an das rekonfigurierbare Modul mittlerer Hochfrequenz (303) zu senden,
wobei
das drahtlose Multimode-Endgerät dazu konfiguriert ist, in zwei Modi zu arbeiten: parallelem "Long-Term-Evolution"-, LTE-, und "Time-Division-Wideband-Code-Division-Multiple-Access"-, TD-WCDMA-, Modus und Nur-LTE-Modus, wobei,
wenn das drahtlose Multimode-Endgerät sowohl in einem LTE-Modus als auch in einem TD-WCDMA-Modus arbeiten muss, das Endgerät derart konfiguriert ist, dass ein Hochfrequenz-Sendeempfänger und zwei Antennen dafür konfiguriert sind, eine Zwei-Antennen-2T2R-LTE-Kommunikationsverbindung zu bilden und ein anderer Hochfrequenz-Sendeempfänger und zwei andere Antennen dazu konfiguriert sind, eine andere Zwei-Antennen-2T2R-TD-WCDMA-Kommunikationsverbindung zu bilden, so dass das Endgerät dazu eingerichtet ist, synchron und parallel in den beiden Standards zu arbeiten, und
wenn das drahtlose Multimode-Endgerät nur in einem LTE-Modus arbeiten muss, die mindestens zwei Hochfrequenz-Sendeempfänger und die vier Antennen dazu konfiguriert sind, gemeinsam eine LTE-Kommunikationsverbindung zu bilden, bei der eine Bandbreite der neuen LTE-Kommunikationsverbindung eine Summe der Bandbreiten der mindestens zwei Hochfrequenz-Sendeempfänger ist, so dass eine Datendurchsatzfähigkeit der neuen LTE-Kommunikationsverbindung verbessert ist.

2. Drahtloses Multimode-Endgerät nach Anspruch 1, ferner umfassend:
eine programmierbare Teilnehmerkarte, die dazu konfiguriert ist, Teilnehmeridentitätsverarbeitung für den mindestens einen Standard drahtloser Kommunikation durchzuführen.

3. Drahtloses Multimode-Endgerät nach Anspruch 1 oder 2, wobei das rekonfigurierbare Basisband-Verarbeitungsmodul (302) eine Referenztaktgeber-Synchronisierungseinheit (501) umfasst und die Taktgeber-Synchronisierungseinheit (501) dazu konfiguriert ist, Referenztaktgeberinformationen zwischen dem rekonfigurierbaren Basisband-Verarbeitungsmodul (302) und dem rekonfigurierbaren Modul mittlerer Hochfrequenz (303) zu synchronisieren.

4. Drahtloses Multimode-Endgerät nach einem der Ansprüche 1 bis 3, wobei, wenn das rekonfigurierbare Basisband-Verarbeitungsmodul (302) dazu konfiguriert ist, Daten physischer Schichten von sowohl einem LTE-Modus als auch einem TD-WCDMA-Modus zu verarbeiten, das rekonfigurierbare Basisband-Verarbeitungsmodul (302) ferner dazu konfiguriert ist, die Daten der physischen Schichten zwischen dem LTE-Modus und dem TD-WCDMA-Modus auszutauschen.

5. Drahtloses Multimode-Endgerät nach Anspruch 3, wobei das rekonfigurierbare Basisband-Verarbeitungsmodul (302) mindestens zwei DSP-Chips umfasst und die Taktgeber-Synchronisierungseinheit (501) spezifisch dazu konfiguriert ist, Referenztaktgeberinformationen zwischen den DSP-Chips und den mindestens zwei Hochfrequenz-Sendeempfängern, deren Frequenz und Bandbreite justierbar sind, zu synchronisieren.

6. Drahtloses Multimode-Endgerät nach Anspruch 5, wobei sich die Referenztaktgeber-Synchronisierungseinheit (501) in einem beliebigen DSP-Chip auf dem rekonfigurierbaren Basisband-Verarbeitungsmodul (302) befindet.

7. Drahtloses Multimode-Endgerät nach einem der Ansprüche 1 bis 6, wobei die universelle zentrale Recheneinheit (301) und das rekonfigurierbare Basisband-Verarbeitungsmodul (302) als ein anwendungsspezifischer integrierter Schaltkreis ASIC gehäust sind.

8. Drahtloses Multimode-Endgerät nach einem der Ansprüche 1 bis 7, wobei jeder Hochfrequenzkanal des rekonfigurierbaren Moduls mittlerer Hochfrequenz (303) eine justierbare Frequenz von mindestens 0 GHz bis 6 GHz, eine Bandbreite von mindestens 20 MHz und eine Verarbeitungsfähigkeit, die 2T2R und MIMO unterstützt, umfasst.

## Revendications

1. Terminal sans fil multimode, comprenant :
une unité centrale de traitement universelle (301), un module de traitement de bande de base reconfigurable (302), un module de radiofréquence intermédiaire reconfigurable (303),et un module d'antenne reconfigurable (304), dans lequel :
l'unité centrale de traitement universelle (301) est configurée pour déterminer des informations de configuration d'au moins une norme de communications sans fil, les informations de configuration de l'au moins une norme de communications sans fil comprenant des informations de configuration des couches de protocole de l'au moins une norme de communications sans fil, des informations de configuration d'un canal de radiofréquence correspondant à l'au moins une norme de communications sans fil, et des informations de configuration d'une combinaison d'antennes correspondant à l'au moins un canal de radiofréquence ;
l'unité centrale de traitement universelle (301) est configurée en outre pour traiter des données de liaison montante et des données de liaison descendante de couches de protocole, à l'exception d'une couche physique, de l'au moins une norme de communications sans fil ;
le module de traitement de bande de base reconfigurable (302) est un processeur, le processeur étant au moins l'un parmi un processeur universel X86, une machine informatique à ensemble d'instructions réduit évoluée, ARM, et une puce de traitement de signaux numériques, DSP ;
le module de traitement de bande de base reconfigurable (302) est configuré pour, conformément aux informations de configuration de la couche physique de l'au moins une norme de communications sans fil et déterminées par l'unité centrale de traitement universelle (301), traiter des données de liaison montante envoyées par l'unité centrale de traitement universelle (301) en données de liaison montante de la couche physique et envoyer les données de liaison montante de la couche physique au module de radiofréquence intermédiaire reconfigurable (303), et traiter des données de liaison descendante de la couche physique et envoyées par le module de radiofréquence intermédiaire reconfigurable (303) en données de liaison descendante et envoyer les données de liaison descendante à l'unité centrale de traitement universelle (301) ;
le module de radiofréquence intermédiaire reconfigurable (303) comprend au moins deux émetteurs-récepteurs de radiofréquence dont la fréquence et la largeur de bande sont réglables ;
le module de radiofréquence intermédiaire reconfigurable (303) est configuré pour reconfigurer, conformément aux informations de configuration du canal de radiofréquence correspondant à l'au moins une norme de communications sans fil et déterminées par l'unité centrale de traitement universelle (301), une fréquence centrale et une largeur de bande du canal de radiofréquence correspondant à l'au moins une norme de communications sans fil, fournir le canal de radiofréquence correspondant à l'au moins une norme de communications sans fil, convertir les données de liaison montante de la couche physique et envoyées par le module de traitement de bande de base reconfigurable (302) en un signal de radiofréquence de liaison montante et envoyer le signal de radiofréquence de liaison montante au module d'antenne reconfigurable (304), et convertir un signal de radiofréquence de liaison descendante envoyé par le module d'antenne reconfigurable (304) en données de liaison descendante de la couche physique et envoyer les données de liaison descendante de la couche physique au module de traitement de bande de base reconfigurable (302) ; le module d'antenne reconfigurable (304) comporte quatre antennes (604) et un module de commutation d'antennes et est configuré pour prendre en charge une transmission à deux émissions, deux réceptions, 2T2R et à entrées multiples, sorties multiples, MIMO, et le module de commutation d'antennes du module d'antenne reconfigurable (304) est configuré pour reconfigurer, conformément aux informations de configuration de la combinaison d'antennes correspondant à l'au moins un canal de radiofréquence et déterminées par l'unité centrale de traitement universelle (301), les multiples antennes (604) en la combinaison d'antennes correspondant à l'au moins un canal de radiofréquence ; et
le module d'antenne reconfigurable (304) est configuré pour transmettre le signal de radiofréquence de liaison montante converti par le module de radiofréquence intermédiaire reconfigurable (303), et envoyer le signal de radiofréquence de liaison descendante reçu au module de radiofréquence intermédiaire reconfigurable (303) le terminal sans fil multimode étant configuré pour fonctionner dans deux modes : un mode simultané LTE (technologie d'évolution à long terme) et TD-WCDMA (Time Division-Wideband Code Division Multiple Access - Accès multiple par répartition temporelle - répartition en code à large bande), et un mode LTE uniquement ;
si le terminal sans fil multimode doit travailler à la fois dans un mode LTE et dans un monde TD-WCDMA, le terminal étant configuré de telle sorte qu'un émetteur-récepteur de radiofréquence, et deux antennes, soient configurés pour former une liaison de communications 2T2R LTE à deux antennes, et qu'un autre émetteur-récepteur de radiofréquence, et deux autres antennes, soient configurés pour former une autre liaison de communications 2T2R TC-WCDMA à deux antennes de telle sorte que le terminal soit adapté pour fonctionner de manière synchrone et simultanée dans les deux normes ; et
si le terminal sans fil multimode doit travailler uniquement dans un réseau LTE, les au moins deux émetteurs-récepteurs de radiofréquence, et les quatre antennes, étant configurés pour former conjointement une liaison de communications LTE, où une largeur de bande de la nouvelle liaison de communications LTE est une somme des largeurs de bande des au moins deux émetteurs-récepteurs de radiofréquence de telle sorte qu'une capacité de débit de données de la nouvelle liaison de communications LTE soit améliorée.

2. Terminal sans fil multimode selon la revendication 1, comprenant en outre :
une carte d'abonné programmable, configurée pour réaliser un traitement d'identité d'abonné pour l'au moins une norme de communications sans fil.

3. Terminal sans fil multimode selon la revendication 1 ou 2, dans lequel le module de traitement de bande de base reconfigurable (302) comprend une unité de synchronisation d'horloge de référence (501), et l'unité de synchronisation d'horloge (501) est configurée pour synchroniser des informations d'horloge de référence entre le module de traitement de bande de base reconfigurable (302) et le module de radiofréquence intermédiaire reconfigurable (303).

4. Terminal sans fil multimode selon l'une quelconque des revendications 1 à 3, dans lequel, si le module de traitement de bande de base reconfigurable (302) est configuré pour traiter des données de couches physiques à la fois d'un mode LTE et d'un mode TD-WCDMA, le module de traitement de bande de base reconfigurable (302) est configuré en outre pour échanger les données des couches physiques entre le mode LTE et le mode-WCDMA.

5. Terminal sans fil multimode selon la revendication 3, dans lequel le module de traitement de bande de base reconfigurable (302) comprend au moins deux puces DSP et l'unité de synchronisation d'horloge (501) est configurée spécifiquement pour synchroniser des informations d'horloge de référence entre les puces DSP et les au moins deux émetteurs-récepteurs de radiofréquence dont la fréquence et la largeur de bande sont réglables.

6. Terminal sans fil multimode selon la revendication 5, dans lequel l'unité de synchronisation d'horloge de référence (501) est située dans n'importe quelle puce DSP sur le module de traitement de bande de base reconfigurable (302).

7. Terminal sans fil multimode selon l'une quelconque des revendications 1 à 6, dans lequel l'unité centrale de traitement universelle (301) et le module de traitement de bande de base reconfigurable (302) sont conditionnés en tant que circuit intégré spécifique à l'application, ASIC.

8. Terminal sans fil multimode selon l'une quelconque des revendications 1 à 7, dans lequel chaque canal radiofréquence du module de radiofréquence intermédiaire reconfigurable (303) a une bande de fréquences réglable d'au moins 0 GHz à 6 GHz, une largeur de bande d'au moins 20 MHz et une capacité de traitement qui prend en charge 2T2R et MIMO.
